# NEUE EUROPÄISCHE PATENTSCHRIFT

(11) **EP 0 329 744 B2**
(45) Veröffentlichungstag und Bekanntmachung des Hinweises auf die Entscheidung über den Einspruch: **07.02.1996**
(45) Hinweis auf die Patenterteilung: 27.01.1993
(21) Anmeldenummer: 88907272.4
(22) Anmeldetag: 12.08.1988
(51) Int. Cl.: B01D 29/13

(54) **FILTERKERZE**
FILTER CANDLE
FILTRE EN FORME DE BOUGIE

(30) Priorität: 14.08.1987 DE 8711084 U
(43) Veröffentlichungstag der Anmeldung: 30.08.1989
(73) Patentinhaber: Friedrichs, Dieter, D-41849 Wassenberg (DE)
(72) Erfinder: Friedrichs, Dieter, D-41849 Wassenberg (DE)
(74) Vertreter: Freischem, Werner, Dipl.-Ing.
(86) Internationale Anmeldenummer: EP8800723
(87) Internationale Veröffentlichungsnummer: WO8901358

(56) Entgegenhaltungen:
- DE-A- 2 512 781
- FR-A- 2 160 827
- GB-A- 1 265 784
- GB-A- 1 375 188
- Katalog "Filters" der Firma Sofrance
- Zeichung der Firma Grünbeck
- Schreiben der Firma H.S. Luftfilterbau GmbH vom 11.10.93

## Beschreibung

Die Erfindung geht aus Von einer Filterkerze, insbesondere für Rückspülfilter, mit
- einem zylindrischen Stützkörper, der in seinen beiden Endbereichen mit einem Gewinde versehen ist,
- einem über den Stützkörper geschobenen schlauchförmigen Filtermittel,
- einem mit einem Durchlaß für das Filtrat versehenen Fußteil, das ein Gewinde zum Aufschrauben auf den Stützkörper aufweist und auf diesen aufgeschraubt ist und
- einem Kopfteil, das ebenfalls ein Gewinde zum Aufschrauben auf den Stützkörper aufweist und auf diesen aufgeschraubt ist, wobei das Enßteil und das Kopfteil je eine sylindrische Ausnehmung aufweisen, deren Durchmesser kleiner ist als der Außendurchmesser des Stützkörpers.

Eine Filterkerze dieser Art ist aus der GB A-1 265 784 bekannt. Bei der bekannten Filterkerze wird der Stützkörper von einer Schraubenfeder gebildet, in deren Endbereiche rohrförmige, mit je einem Außengewinde versehene Stutzen des Fußteiles und des Kopfteiles einschraubbar sind. Das schläuchförmige, insbesondere aus Nylongewebe bestehende Filtermittel ist über die so gebildete Filterkerze gezogen und überdeckt die Schraubenfeder über ihre ganze Länge. Diese bekannte Filterkerze kann in,axialer Richtung nur sehr geringe Kräfte aufnehmen und ist für Rückspülfilter und solche Filter, bei denen zwischen Schmutzseite und Sauberseite größere Druckdifferenzen auftreten, nicht geeignet, weil eine zuverlässige Abdichtung zwischen den Enden des schlauchförmigen Filtermittels und dem Fußteil sowie dem Kopfteil nicht erfolgt.

Für Rückspülfilter sind Filterkerzen bekannt, bei denen das Fußteil und das Kopfteil durch Schweißung mit einem starren Stützkörper verbunden sind. Der Stützkörper setzt sich beispielsweise zusammen aus längsverlaufenden, im Abstand voneinander im Kreis angeordneten Stützstäben und mindestens einem um die Stützstäbe mit konstanter Steigung gewickelten und mit den Stützstäben verschweißten Drahtwendel. Stützkörper dieser Art sind bekannt aus der FR-A-14 25 297 und der DE-C-26 33 372. Das schlauchförmige Filtermittel ist vorzugsweise ein Filtergewebe aus Metall- oder Kunststoffdrähten, das über eine geschweißte oder geklebte Längsnaht zu einem Schlauch geschlossen ist und mit möglichst geringem Spiel über den Stützkörper geschoben ist. Die Enden des schlauchförmigen Filtermittels, das auch Filterstrumpf oder Geweberohr genannt wird, sind durch Schweißung oder Klebung dicht mit dem Fußteil bzw. dem Kopfteil verbunden.

Diese bekannten Filterkerzen sind nicht demontierbar. Das Verbinden des schlauchförmigen Filtermittels bzw. des Filterstrumpfes mit dem Fußteil und dem Kopfteil durch Schweißung, insbesondere Punktschweißung, ist schwierig und führt leicht zu Fehlern und zu Schwachstellen,weil das Filtergewebe dabei leich thermisch überlastet wird.

Es ist auch bekannt, zum Abdichten des Filterstrumpfes gegen das Fußteil und gegen das Kopfteil Blechkappen zu verwenden, die über das Fußteil oder das Kopfteil und den jeweils angrenzenden Endbereich des Filterstrumpfes gestülpt werden und durch radiales Zusammenpressen der Blechkappe, deren Innenwandung vorher mit einem Kunststoffkleber beschichtet wurde, in dichte Anlage an den Filterstrumpf gebracht werden. Diese Art der Abdichtung ist arbeitsaufwendig und schwierig durchzuführen und führt häufig zu undichten Verbindungen.

Der Erfindung liegt die Aufgabe zugrunde, eine demontierbare Filterkerze zu schaffen, bei welcher das Fußteil und das Kopfteil schnell und zuverlässig am Stützkörper befestigt werden können und die Enden des schlauchförmigen Filtermittels zuverlässig gegen das Fußteil und das Kopfteil abgedichtet werden können.

Diese Aufgabe wird nach der Erfindung dadurch gelöst, daß die Gewinde in den Endbereichen des Stützkörpers Außengewinde sind, welche in Innengewinde des Fußteils und des Kopfteils eingeschraubt sind, die in die Wand der zylindrischen Ausnehmungen eingearbeitet sind, deren Durchmesser etwas kleiner sind als der Außendurchmesser des Stützkörpers, daß jedes Innengewinde inbezug auf Durchmesser, Steigung und Querschnitt dem Außengewinde des Stützkörpers angepaßt ist und daß das Fußteil und das Kopfteil mit sich über die Endbereiche des gegenüber dem Stützkörper kürzeren, schlauchförmigen Filtermittels erstreckende Überwurfringe versehen sind und zwischen den Endbereichen des schlauchförmigen Filtermittels und den Überwurfringen ein Spalt ist und in diesem Spalt eine Dichtung angeordnet ist oder die Überwurfringe unter plastischer Verformung dichtend gegen das sich auf den Stützkörper abstützende Filtermittel angerollt sind.

Nach dem Aufziehen des Filterstrumpfes bzw. des schlauchförmigen Filtermittels auf den Stützkörper können das Fußteil und das Kopfteil bis zum Anschlag auf den Stützkörper aufgeschraubt werden und die Filterstrumpfenden mittels einer plastischen Dichtungsmasse, einem Weichlot oder einem Kunststoffkleber gegenüber den Überwurfringen abgedichtet werden.

Damit beim Aufschrauben des Fuß- und Kopfteils gleichzeitig eine zuverlässige Dichtung erreicht wird, wird vor dem Aufschrauben des Fuß- und Kopfteiles an der Innenseite des Überwurfringes eine Schicht Dichtungsmasse angebracht, die sich beim Aufschrauben des Fuß- und Kopfteiles dichtend gegen den Endbereich des Filterstrumpfes drückt und zumindest teilweise dort in das Filtergewebe eindringt.

Eine bessere und zuverlässigere Verteilung der Dichtungsmasse wird erreicht, wenn der Spalt zwischen dem zylindrischen Filterstrumpf oder Filterrohr und der Innenwand des Überwurfringes keilförmig ist d.h. wenn die Innenwand des Überwurfringes konisch ausgebildet ist und der Innendurchmesser des Überwurfringes zum freien Rand hin sich vergrößert.

Das Abdichten des Überwurfringes gegenüber dem Filterstrumpf kann aber auch dadurch erfolgen, daß ein metallisches Lot in den Spalt zwischen Filterstrumpf und Innenwand des Überwurfringes eingebracht wird. Sofern dieser Spalt größer bemessen ist, kann die Abdichtung auch durch Einpressen eines elastischen Ringes erfolgen.

Schließlich kann das Abdichten des Überwurfringes gegenüber dem Filterstrumpf auch dadurch erfolgen, daß die Wandstärke des Überwurfringes relativ gering ist und der Innendurchmesser des Überwurfringes durch Anrollen soweit reduziert wird, daß das Filtergewebe dicht zwischen dem Stützkörper bzw. dem Drahtwendel und der Innenfläche des Überwurfringes eingeklemmt ist.

Weitere Merkmale der Erfindung ergeben sich aus den Unteransprüchen.

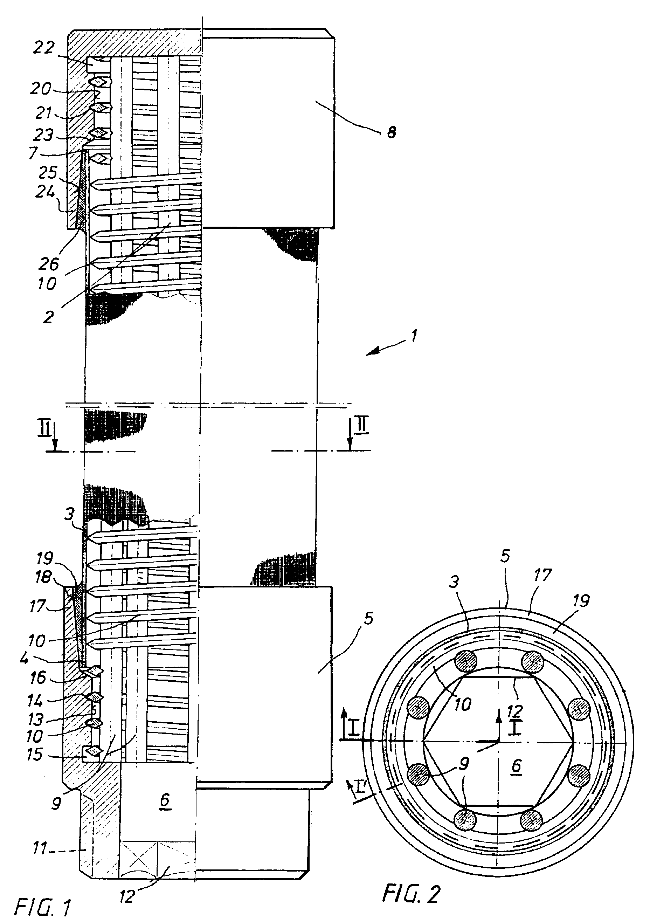

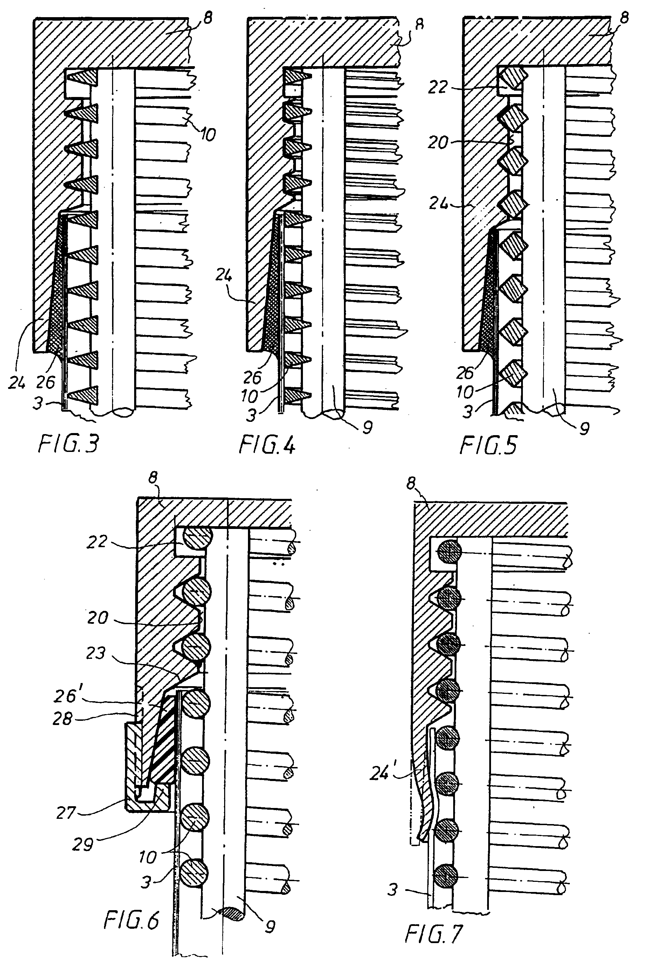

In der folgenden Beschreibung werden Ausführungsbeispiele erfindungsgemäßer Filterkerzen unter Bezugnahme auf die Zeichnungen näher erläutert. Die Zeichnungen zeigen in
Fig. 1 zur Hälfte eine Seitenansicht und zur anderen Hälfte eine Längsschnittansicht obererTeil nach der Schnittlinie I-I und unterer Teil nach der Schnittlinie I-I' in Fig. 2,
Fig. 2 eine Schnittansicht nach der Schnittlinie II-II in Fig. 1.
Fig. 3,4,5,6 und 7 Teilansichten von fünf verschiedenen Ausführungsformen der erfindungsgemäßen Filterkerze im Längsschnitt,
Wie die Fig. 1 und 2 zeigen, setzt sich die Filterkerze 1 zusammen aus einem zylindrischen Stützkörper 2, einem über den Stützkörper 2 geschobenen schlauchförmigen Filtermittel 3, das auch mit Filterstrumpf oder Filterrohr bezeichnet wird, einem mit einem Durchlaß 6 für das Filtrat versehenen und am Stützkörper 2 befestigten Fußteil 5, das zum Anschluß der Filterkerze 1 an eine Platte der Filtervorrichtung dient, und einem am Stützkörper 2 befestigten Kopfteil 8.

Der Stützkörper 2 setzt sich zusammen aus längsverlaufenden, im Abstand voneinander im Kreis angeordneten Stützstäben 9 und mindestens einem um die Stützstäbe 9 mit konstanter Steigung gewickelten und daran angeschweißten Drahtwendel 10.

Der Stützkörper 2 kann aber auch zwei oder drei Drahtwendel aufweisen, die in gleichen Abständen zueinander versetzt sind und die eine entsprechend steilere Steigung aufweisen.

Das Fußteil 5 und das Kopfteil 8 weisen eine zylindrische Ausnehmung auf, deren Durchmesser etwas kleiner ist als der Außendurchmesser des Stützkörpers 2. In die Wand 13 und 20 dieser zylindrischen Ausnehmung ist ein Innengewinde 14 bzw. 21 eingearbeitet, das in bezug auf Durchmesser, Steigung und Querschnitt dem Außengewinde 10 des Stützkörpers 2 angepaßt ist, so daß das Fußteil 5 und das Kopfteil 8 aufden Stützkörper 2 aufschraubbar sind. Das Fußteil 5 und das Kopfteil 8 sind mit Überwurfringen 17 und 24 versehen, die sich über die Endbereiche des Filterstrumpfes 3 erstrecken und deren konisch ausgebildete Innenwand 18 bzw. 25 über eine Dichtmittel 19 bzw. 26 gegen die beiden Randbereiche des Filterstrumpfes 3 abgedichtet sind.

Das Fußteil 5 der Kerze ist mit einem Gewinde 11 versehen, das zum Anschluß der Filterkerze an eine Platte einer Filtervorrichtung dient. Am Ende der zylindrischen Ausnehmung ist eine Hinterschneidung 15 vorgesehen, damit das Gewinde 14 sauber auslaufend in die Zylinderfläche 13 eingearbeitet werden kann. Am Übergang zwischen zylindrischer Ausnehmung und Überwurfring 17 ist eine Stufe 16 vorgesehen, deren Größe davon abhängig ist, wie dick das Filtermittel 3 ist und wie groß der erwünschte Spalt zwischen dem Filtermittel und der konischen Innenfläche 18 des Überwurfringes 17 sein soll.

Das Kopfteil 8 ist im Hinblick aufdie Anschlußteile an den Stützkörper 2 und den Filterstrumpf 3 ebenso ausgebildet wie das Fußteil 5. In die Zylinderwand 20 ist ein Gewinde 21 eingearbeitet, das dem Gewinde 14 entspricht. Ferner ist eine Hinterschneidung 22 vorgesehen und eine Stufe 23, die von der zylindrischen Ausnehmung zur konischen Innenwand 25 des Überwurfringes 24 überleitet. Der keilförmige Spalt zwischen Filterstrumpf 3 und der konischen Innenfläche 25 des Überwurfringes 24 ist mit einem Dichtmittel 26 ausgefüllt. Das Fußteil 5 und das Kopfteil 8 sind bis zum Anschlag des Stützkörpers 2 an entsprechende Anschlagflächen auf den Stützkörper 2 aufgeschraubt. Während dieses Aufschraubvorganges erfolgt auch die Abdichtung, wenn zuvor ein Dichtmittel auf die konischen Innenflächen 18 und 25 des Fußteiles 5 und des Kopfteiles 8 aufgebracht worden ist. Zum Einschrauben der so montierten Filterkerze 1 dient das Gewinde 11 und der Innensechskant 12 am Fußteil 5.

Wie die Fig. 3,4 und 5 zeigen, kann der Drahtquerschnitt des Drahtwendels 10 unterschiedlich sein. In Fig. 3 ist der Drahtquerschnitt ein spitzwinkliges Dreieck mit außenliegender Spitze. Die kurze Seite der Dreieckquerschnittes ist an den längsverlaufenden Stützstäben 9 angeschweißt. In Fig. 4 ist der Drahtquerschnitt des Wendels 10 ebenfalls dreieckförmig, jedoch ist hier die Spitze des Drahtquerschnittes an den längsverlaufenden Stützstäben 9 angeschweißt und die kurze Seite des Dreieckquerschnitts bildet den Zylindermantel.

In Fig. 5 ist der Drahtquerschnitt quadratisch und eine Ecke dieses Querschnitts ist an den Stützstäben 9 angeschweißt, während die andere Ecke den Außenumfang des Stützkörpers 2 bildet.

In den Fig. 6 und 7 ist der Drahtquerschnitt des Drahtwendels 10 rund.

Bei den Ausführungsbeispielen nach Fig. 3,4 und 5 erfolgt die Dichtung zwischen Filterstrumpf und Überwurfring 24 mittels einer Dichtungsmasse 26, die beispielsweise aus Silikon oder einer Polyurethan-, Epoxydharz- oder Polyesterklebmasse besteht.

In Fig. 6 wird die Dichtung von einem elastischen keilförmigen Dichtungsring 26' bewirkt, der von einer Überwurfmutter 27 axial zusammengepreßt wird. An der Außenfläche des überwurfringes 24 ist ein Außengewinde 28 eingearbeitet, aufwelches das Innengewinde der Überwurfmutter 27 aufschraubbar ist, so daß der Druckring 29 der Überwurtmutter 27 gegen den elastischen Dichtungsring 26' drückt und diesen in dichtende Anlage bringen kann.

In Fig. 7 wird die Dichtung zwischen dem Filterstrumpf 3 und dem überwurfring 24' dadurch erreicht, daß nach dem Aufschrauben des Fußteils 5 und des Kopfteils 8 der Überwurfring 17 bzw. 24' radial angerollt wird, so daß sich der Innendurchmesser des Überwurfringes 24' so weit reduziert, bis dieser den Filterstrumpf 3 dichtend gegen die Windungen des Drahtwendels 10 einklemmt.

Da die erfindungsgemäßen Filterkerzen insbesondere für Rückspülfilter bestimmt sind und zur wirksamen Rückspülung häufig ein extrem hoher Druck erwünscht ist, kann es bei Filterstrümpfen aus relativ empfindlichem Filtergewebe zweckmäßig sein, um den Filterstrumpf einen Stützmantel aus gröberem Filtergewebe anzuordnen, Dieser Stützmantel ist mit seinen Endbereichen ebenfalls gegenüber der Innenfläche der Überwurfringe des Fußteiles und des Kopfteiles abgedichtet. Dieser Stützmantel verhindert, daß der Filterstrumpf infolge eines hohen Rückspüldruckes platzt

Bei dem erfindungsgemäßen Kerzenfilter kann es von Vorteil sein, wenn die Stützkörper 2 mehrere relativ steil verlaufende Drahtwendel 10 aufweisen. Derartige Stützkörper können durch Verdrillen im Durchmesser etwas reduziert werden. Durch diese Durchmesserreduktion läßt sich das Aufziehen des Filterstrumpfes 3 auf den Stützkörper 2 erleichtern und es kann so erreicht werden, daß der Filterstrumpf 2 stramm aus dem Stützkörpersitzt, wenn die Torsion um die Längsachse rückgängig gemacht ist. Ein strammer Sitz des Filterstrumpfes 3 auf dem Stützkörper 2 hat insbesondere bei Rückspülfiltern den Vorteil, daß der Filterstrumpf eine längere Lebensdauer hat.

## Patentansprüche

1. Filterkerze, insbesondere für Rückspülfilter, mit
- einem zylindrischen Stützkörper (2), der in seinen beiden Endbereichen mit einem Gewinde (10) versehen ist,
- einem über den Stützkörper (2) geschobenen schlauchförmigen Filtermittel (3),
- einem mit einem Durchlaß (6) für das Filtrat versehenen Fußteil (5), das ein Gewinde zum Aufschrauben auf den Stützkörper (2) aufweist und auf diesen aufgeschraubt ist und
- einem Kopfteil (8), das ebenfalls ein Gewinde zum Aufschrauben auf den Stützkörper (2) aufweist und auf diesen aufgeschraubt ist, wobei das Fußteil und das Kopfteil je eine zylindrische Ausnehmung aufweisen, deren Durchmesser kleiner ist als der Außendurchmesser des Stützkörpers, dadurch gekennzeichnet, daß die Gewinde in den Endbereichen des Stützkörpers (2) Außengewinde (10) sind, welche in Innengewinde (14,21) des Fußteils (5) und des Kopfteils (8) engeschraubt sind, die in die Wand (13,20) der zylindrischen Ausnehmungen eingearbeitet sind, deren Durchmesser etwas kleiner sind als der Außendurchmesser des Stützkörpers (2), daß jedes Innengewinde (14,21) in bezug auf Durchmesser, Steigung und Querschnitt dem Außengewinde (10) des Stützkörpers (2) angepaßt ist und daß das Fußteil (5) und das Kopfteil (8) mit sich über die Endbereiche des gegenüber dem Stützkörper (2) kürzeren, schlauchförmigen Filtermittels (3) erstreckende Überwurfringe (17,24) versehen sind und zwischen den Endbereichen des schlauchförmigen Filtermittels (3) und den Überwurfringen (17,24) ein Spalt ist und in diesem Spalt eine Dichtung (19,26) angeordnet ist oder die Überwurfringe (24') unter plastischer Verformung dichtend gegen das sich auf den Stützkörper (2) abstützende Filtermittel (3) angerollt sind.

2. Filterkerze nach Anspruch 1 mit einem Stützkörper (2), der aus längsverlaufenden, im Abstand voneinander im Kreis angeordneten Stützstäben (9) und mindestens einem um die Stützstäbe (9) mit konstanter Steigung gewickelten und daran angeschweißten Drahtw.endeln besteht, dadurch gekennzeichnet, daß das Außengewinde (10) in den Endbereichen des Stützkörpers (2) von dem Drahtwendel gebildet ist.

3. Filterkerze nach Anspruch 2, dadurch gekennzeichnet, daß der Stützkörper (2) zwei oder drei Drahtwendel (10) aufweist und in der Wand (13,20) der zylindrischen Ausnehmung des Fußteiles (5) und des Kopfteiles (8) entsprechend mehrgängige Innengewinde (14,21) eingearbeitet sind.

4. Filterkerze nach einem der Ansprüche 1 bis 3, dadurch gekennzeichnet, daß die Innenwand (18,25) des Überwurfringes (17,24) konisch ausgebildet ist.

5. Filterkerze nach einem der Ansprüche 1 bis 4, dadurch gekennzeichnet, daß die Dichtung (19,26) aus einer plastischen Masse besteht.

6. Filterkerze nach einem der Ansprüche 1 bis 4, dadurch gekennzeichnet, daß die Dichtung (19,26) aus einer Polyurethan-, Epoxydharz- oder Polyesterklebmasse besteht.

7. Filterkerze nach einem der Ansprüche 1 bis 4, dadurch gekennzeichnet, daß die Dichtung (19,26) aus einem metallischen Lot, insbesondere Weichlot, besteht.

8. Filterkerze nach einem der Ansprüche 1 bis 4, dadurch gekennzeichnet, daß die Dichtung (19,26) ein elastischer Körper ist.

9. Filterkerze nach Anspruch 8, gekennzeichnet durch eine auf den Überwurfring (17,24) aufschraubbare und den elastischen Körper (26') axial zusammendrückende Überwurfmutter (27).

10. Filterkerze nach einem der Ansprüche 1 bis 9, dadurch gekennzeichnet, daß der Filterstrumpf (3) von einem gleichlangen Stützmantel aus gröberem Filter- oder Siebgewebe abgestützt ist, dessen Endbereiche zusammen mit denen des Filterstrumpfes (3) gegen die Innenwand der Überwurfringe (17,24,24') abgedichtet ist.

## Claims

1. A filter candle, in particular for backflush filters, comprising:
- a cylindrical support body (2) which is provided with a screwthread (10) in its two end regions,
- a filter means (3) in hose form, which is pushed over the support body (2),
- a base part (5) which is provided with a passage (6) for the filtrate and which has a screwthread for screwing on to the support body (2) and which is screwed on to same, and
- a head part (8) which also has a screwthread for screwing on to the support body (2) and rich is screwed on to same, wherein the base part and the head part each have a cylindrical opening, the diameter of which is smaller than the outside diameter of the support body, characterised in that the screwthreads in the end regions of the support body (2) are male screwthreads (10) which are screwed into female screwthreads (14, 21) of the base part (5) and the head part (8), which are provided in the wall (13, 20) of the cylindrical openings, the diameters of rich are somewhat smaller than the outside diameter of the support body (2), that each female screwthread (14, 21) is adapted in respect of diameter, pitch and cross-section to the male screwthread (10) of the support body (2), and that the base part (5) and the head part (8) are provided with screw cap rings (17, 24) which extend over the end regions of the hose-form filter means (3) which is shorter than the support body (2) and there is a gap between the end regions of the hose-form filter means (3) and the screw cap rings (17, 24) and a seal (19, 26) is arranged in said gap or the screw cap rings (24') are rolled with plastic deformation sealingly against the filter means (3) which bears against the support body (2).

2. A filter candle according to claim 1 comprising a support body (2) which comprises longitudinally extending support bars (9) which are arranged in a circle at spacings from each other and at least one wire coil which is wound at a constant pitch around the support bars (9) and welded thereto, characterised in that the male screwthread (10) in the end regions of the support body (2) is formed by the wire coil.

3. A filter candle according to claim 2 characterised in that the support body (2) has two or three wire coils (10) and correspondingly multi-flight female screwthreads (14, 21) are provided in the wall (13, 20) of the cylindrical openings in the base part (5) and the head part (8).

4. A filter candle according to one of claims 1 to 3 characterised in that the inside wall (18, 25) of the screw cap ring (17, 24) is of a conical configuration.

5. A filter candle according to one of claims 1 to 4 characterised in that the seal (19, 26) comprises a plastic material.

6. A filter candle according to one of claims 1 to 4 characterised in that the seal (19, 26) comprises a polyurethane, epoxy resin or polyester adhesive material.

7. A filter candle according to one of claims 1 to 4 characterised in that the seal (19, 26) comprises a metal solder, in particular soft solder.

8. A filter candle according to one of claims 1 to 4 characterised in that the seal (19, 26) is an elastic body.

9. A filter candle according to claim 8 characterised by a cap nut (27) which can be screwed on to the screw cap ring (17, 24) and which axially compresses the elastic body (26').

10. A filter candle according to one of claims 1 to 9 characterised in that the filter hose member (3) is supported by a support sheath of the same length and of coarser filter or sieve fabric and the end regions of which, together with those of the filter hose member (3), is sealed relative to the inside wall of the screw cap rings (17, 24, 24').

## Revendications

1. Bougie de filtre, notamment pour filtre à lavage à contre-courant, comprenant:
- un corps cylindrique de soutien (2) qui est pourvu d'un filetage (10) dans ses deux zones d'extrémité,
- un moyen filtrant (3) en forme de tuyau souple enfilé par-dessus le corps de soutien (2),
- une partie de pied (5), pourvue d'un passage (6) pour le filtrat, qui comprend un filetage pour le vissage sur le corps de soutien (2) et qui est vissée sur ce dernier et
- une partie de tête (8), qui comprend aussi un filetage pour le vissage sur le corps de soutien (2) et qui est vissée sur ce dernier, la partie de pied et la partie de tête comportant chacune un évidement cylindrique dont le diamètre est inférieur au diamètre extérieur du corps de soutien,
caractérisée en ce que les filetages prévus dans les zones d'extrémité du corps de soutien (2) sont des filetages extérieurs (10), vissés dans des filetages intérieurs (14, 21) de la partie de pied (5) et de la partie de tête (8) qui sont façonnés dans la paroi (13, 20) des évidements cylindriques dont les diamètres sont un peu inférieurs au diamètre extérieur du corps de soutien (2),
- en ce que chaque filetage intérieur (14, 21) est adapté au filetage extérieur (10) du corps de soutien (2) en ce qui concerne le diamètre, le pas et la section transversale et
- en ce que la partie de pied (5) et la partie de tête (8) sont pourvues de bagues-chapeaux (17, 24) s'étendant sur les zones d'extrémité du moyen filtrant (3) en forme de tuyau souple, qui est plus court que le corps de soutien (2), une fente existant entre les zones d'extrémité du moyen filtrant (3) en forme de tuyau souple et les bagues-chapeaux (17, 24), tandis qu'une garniture d'étanchéité (19, 26) est disposée dans cette fente ou que les bagues-chapeaux (24') s'enroulent d'une manière étanche, par déformation plastique, en appui sur le milieu filtrant (3) prenant lui-même appui sur le corps de soutien (2).

2. Bougie de filtre suivant la revendication 1, comprenant un corps de soutien (2) qui est constitué de tiges de soutien (9), s'étendant longitudinalement et disposées en cercle à distance les unes des autres, et au moins un enroulement de fil métallique enroulé à pas constant autour des tiges de soutien (9) et soudé sur ces dernières, caractérisée en ce que le filetage extérieur (10) prévu dans les zones d'extrémité du corps de soutien (2) est formé par l'enroulement de fil métallique.

3. Bougie de filtre suivant la revendication 2, caractérisée en ce que le corps de soutien (2) comprend deux ou trois enroulements de fil métallique (10) et en ce que des filetages intérieurs (14, 21), a pas multiple en même nombre que ces enroulements, sont façonnés dans la paroi (13, 20) de l'évidement cylindrique de la partie de pied (5) et de la partie de tête (8).

4. Bougie de filtre suivant l'une des revendications 1 à 3, caractérisée en ce que la paroi intérieure (18, 25) de l'anneau-chapeau (17, 24) a une forme conique.

5. Bougie de filtre suivant l'une des revendications 1 à 4, caractérisée en ce que la garniture d'étanchéité (19, 26) est formée d'une masse plastique.

6. Bougie de filtre suivant l'une des revendications 1 à 4, caractérisée en ce que la garniture d'étanchéité (19, 26) est constituée d'une masse de colle de polyuréthanne, de résine époxy ou de polyester.

7. Bougie de filtre suivant l'une des revendications 1 à 4, caractérisée en ce que la garniture d'étanchéité (19, 26) est constituée d'une brasure métallique, notamment d'une brasure tendre.

8. Bougie de filtre suivant l'une des revendications 1 à 4, caractérisée en ce que la garniture d'étanchéité (19, 26) est un corps élastique.

9. Bougie de filtre suivant la revendication 8, caractérisée par un écrou-chapeau (27) qui est agencé de façon à pouvoir être vissé par-dessus l'anneau-chapeau (17, 24) et qui comprime axialement le corps élastique (26').

10. Bougie de filtre suivant l'une des revendications 1 à 9, caractérisée en ce que la chaussette de filtration (3) est soutenue par un manchon de soutien de même longueur, en tissu filtrant ou tissu criblant, dont l'étanchéité des zones d'extrémité est assurée en même temps que celle des zones d'extrémité de la chaussette de filtration (3), vis-à-vis de la paroi intérieure des anneaux-chapeaux (17, 24, 24').
